# EUROPEAN PATENT SPECIFICATION

(11) **EP 3 962 263 B1**
(45) Date of publication and mention of the grant of the patent: **01.06.2022**
(21) Application number: 20731384.2
(22) Date of filing: 28.05.2020
(51) Int. Cl.: A01K 61/13, A01K 61/60, A01K 63/00, A01K 61/75, A01G 33/00, A01K 61/10

(54) **SEAWEED SHELTER FOR LUMPFISH**
MEERESALGENSCHUTZ FÜR SEEHASEN
ABRI À BASE D'ALGUES POUR LOMPES

(30) Priority: 28.05.2019 DK PA201970348
(43) Date of publication of application: 09.03.2022
(73) Proprietor: Tari Spf, 100 Torshavn (FO)
(72) Inventor: ELIASEN, Kirstin, 460 Norðskáli (FO); MORTENSEN, Agnes Mols, 513 Syðrugøta (FO); MORTENSEN, Mortan Mols, 100 Tórshavn (FO)
(74) Representative: Plougmann Vingtoft a/s
(86) International application number: PCT/DK2020/050153
(87) International publication number: WO 2020/239183

(56) References cited:
- WO-A1-2016/186518
- JP-A- 2017 042 088
- NO-B1- 330 707

## Description

### FIELD OF THE INVENTION

The present invention relates to aquaculture, more specifically to seaweed shelters and methods for producing seaweed shelters for cleaner fish, such as lumpfish, e.g. in salmon aquaculture or cleaner fish farming.

### BACKGROUND OF THE INVENTION

Since the 1970s, the salmon louse *Lepeophtheirus salmonis* has been a major problem for the Atlantic salmon farming industry, and the louse has a greater economic impact on the industry than any other parasite. As the louse has developed resistance to almost all available drug treatments, there is a need for alternative treatments. One alternative treatment receiving a lot of attention is the use of cleaner fish, including the lumpfish *Cyclopterus lumpus L,* which have shown to approach docile salmon and pick lice off the salmon.

The locations of salmon sea cages are chosen primarily based on environmental conditions that allow Atlantic salmon to thrive, and it is currently underappreciated that the cleaner fish might not thrive in similar conditions as the salmon due to fundamental physiological differences between the species. As knowledge on cleaner fish biology in captivity and its potential in aquaculture is still very limited, cleaner fish health and welfare in sea cages is compromised and the mortality is often high.

Since the natural requirement of many cleaner fish is to have some surface to attach to, cleaner fish in sea cages with Atlantic salmon need some kind of shelters or substrates to rest and/or hide, which can also provide shelter from the environment. Artificial shelters are commonly used, see WO2016/186518A1.

However, cleaner fish health and welfare in sea cages is still compromised and the mortality is still high.

Hence, an improved cleaner fish shelter would be advantageous, and in particular a cleaner fish shelter which can improve welfare and health of cleaner fish, such as lumpfish, in salmon sea cages and in land-based cleaner fish farming.

### OBJECT OF THE INVENTION

An object of the present invention is to provide an alternative to the prior art. In particular, it may be seen as a further object of the present invention to provide a cleaner fish shelter that solves the above mentioned problems of the prior art.

### SUMMARY OF THE INVENTION

Thus, the above described object and several other objects are intended to be obtained in a first aspect of the present invention by providing a system according to claim 1 for increasing cleaner fish health and welfare in sea cages configured for salmon farming or in land-based tanks configured for cleaner fish farming, the system comprising
- a sea cage configured for salmon farming or a land-based tank configured for cleaner-fish farming
- a seaweed shelter arranged in the sea cage or in the land-based tank, configured to be a habitat for cleaner fish within the sea cage or land-based tank, wherein the seaweed shelter comprises
   - a shelter substrate and seaweed growing on the shelter substrate, wherein at least 80% of the seaweed is of a pre-determined algae species, and wherein the pre-determined algae species comprise one or more of *Saccharina latissima* and/or *Laminaria digitata* and/or *Laminaria hyperborea* and/or *Alaria esculenta* and/or *Palmaria palmata* and/or *Porphyra umbilicalis.*

The present invention is advantageous for several reasons. Besides providing a natural habitat where the cleaner fish can rest and hide, the seaweed shelters of the present invention have properties that increase health and welfare of cleaner fish. For example, seaweed have shown to exhibit pharmacological properties, such as anti-oxidant, anti-inflammatory, antimicrobial and even anticancer properties. Furthermore, green, brown and red marine algae have metabolites useful for the inhibition of bacteria, viruses, fungi and other epibionts. Thus, seaweed shelters comprising living algae provides a better habitat for cleaner fish than artificial shelters for several reasons and can therefore be used in land-based tanks for cleaner fish farming, as well as in sea-cages for salmon farming.

By improving health, welfare and survival of cleaner fish in salmon sea cages, an indirect effect is to improve growth and survival of salmon in aquaculture.

A seaweed shelter according to the present invention comprise a shelter substrate pre-seeded with algae of a pre-determined species or a combination of pre-determined species. The shelter substrate is pre-seeded such that optimal conditions can be provided for the cleaner fish in the sea cages or in the land-based tanks for cleaner fish farming.

If an un-seeded shelter substrate is placed in a salmon cage, the algal growth that develops on the shelter substrate will depend on many factors such as seasonality, biogeography and how long the structure has been in the water. The flora growing under such conditions cannot be controlled and will not be a monoculture or biculture. Thus, if a shelter substrate is placed in a sea-cage for salmon farming without pre-seeded seaweed on it, the algae growth will be random and will not be optimized -or may not even be suitable for a cleaner fish shelter. Furthermore, many algae species suitable for cleaner fish shelters are not present in areas where sea cages for salmon farming are located and will never develop naturally.

Because the shelter substrate of the present invention is grown with algae of a pre-determined species before it is moved to the sea cages, the seaweed shelters will mainly comprise these species of algae and not random algae grown on the shelter substrate in the sea cages.

Thus, the present invention allows the shelters to be designed with the optimal and desired algae species, providing the optimal habitat according to the species of cleaner fish and depending on the needs in each individual sea cage.

In a preferred embodiment, the system of the present invention is configured for increasing lumpfish health and welfare in sea cages configured for salmon farming or in land-based tanks configured for cleaner fish farming, and the pre-determined algae species is configured for improving health and welfare of lumpfish.

In some embodiments of the present invention, the pre-determined algae species comprise a combination of more than one, such as two or three pre-determined algae species.

In embodiments where the pre-determined algae species comprise a combination of more than one, such as two or three pre-determined algae species, the combination of more than one pre-determined algae species together comprise the at least 80% of the seaweed on the shelter substrate. The ratio between the more than one pre-determined algae species does not have to be 1:1. For example if the pre-determined algae species comprise a combination of two pre-determined algae species, one algae species may be 75% of the total population of pre-determined algae species and another may be 25%. Thus, if 80% of the seaweed consist of the pre-determined algae species, 80% of the pre-determined species may be one algae species and 20% of the seaweed may be another. Any ratio between the one or more pre-determined species is within the scope of the present invention.

In some embodiments, the specific pre-determined algae species comprise one or more species of brown algae and/or red algae.

In a preferred embodiment, the pre-determined algae species is *Saccharina latissima. Saccharina latissima* is a fast grower and has a broad morphology that is well suited for cleaner fish, such as lumpfish, to sit on. However, other species with similar charataristics can also be used. Furthermore, other species with other charataristics, but different advantages can also be used alone or in combination with *Saccharina latissima.*

In another preferred embodiment, the pre-determined algae species comprise a combination of *Saccharina latissima* and *Laminaria digitata.*

The combination between the two species *Saccharina latissima* and *Laminaria digitata* is specifically advantageous in sea-cages, as they provide for a roboust shelter that can withstand storms, and function well through an entire salmon production cycle. *Saccharina latissima* is a fast grower and has a broad morphology that is well suited for lumpfish to sit on. *Laminaria digitata* grows much more slowly, but its morphology is also well suited for lumpfish. Thus, *Saccharina latissima* will grow into large individuals first, and will serve as the functioning shelter through the first period of time. Fouling of other marine organisms, primarily invertebrates, is typically seen on the surface of the seaweed after some months in the sea. The fouling can add considerably to the weight of the seaweed, and also make the blade much more brittle. The fouled seaweed is therefore much more vulnerable to storms because the blades are torn off and only the holdfast with the stipe is left on the shelter substrate. The seeded *Laminaria digitata* will be present as an understory that can exploit the open space left by the detached *Saccharina latissima* blades and develop into a functioning shelter. In that way, the combination of algae species provides a shelter that can be grown to a stage where it is ready to serve as a seaweed shelter fast, and at the same time, the combination of species provides a robust shelter that can withstand storms. Other combinations of species with similar characteristics can also be used. Furthermore, other combinations of species with other characteristics, but different advantages can also be used alone or in combination with *Saccharina latissima* and/or *Laminaria digitata.*

In some embodiments, at least 30%, such at least 40%, such as at least 50% of at least one of algae species of the pre-determined algae species of the seaweed shelter have a length of at least 5 cm, such as at least 10 cm, such as at least 15 cm.

The specific structure and arrangement of the shelter substrate within the sea cage is not that important for the present invention. The important thing is, that the shelter substrate is suitable for algae growth and can serve as the foundation for a seaweed shelter of desired size. Furthermore, it needs to be attachable to the sea cage or land-based tank directly or indirectly through one or more additional elements. It may be arranged both in a vertical and horizontal direction within the sea cage or land based tank and can also be coiled up or coiled around a structure. Preferably, the shelter substrate is of flexible material, such that it can be arranged in many different ways. The specific form and material of the shelter substrate will depend on the desired use. In some embodiments, the shelter substrate is one or more lines or strings or treads or a net of textile suitable for algae growth.

In some preferred embodiments, at least a section, preferably the full length, of the shelter substrate (4) may extend horizontally beneath the sea surface.

In some preferred embodiments, at least a section, preferably the full length, of the shelter substrate (4) may extend vertically beneath the sea surface.

A second aspect the present invention relates to a method according to claim 8 of providing a system according to the present invention. The method comprising the steps of
- providing a shelter substrate of a desirable size and form,
- growing seaweed of the pre-determined algae species on the shelter substrate under controlled conditions to obtain a seaweed shelter comprising 100% of the pre-determined algae species,
- arranging the seaweed shelter in a sea cage for farming salmon or in a land-based tank for cleaner fish farming and allowing further growth of the seaweed for a period of time.

The step of growing seaweed to obtain a seaweed shelter comprising 100% of the pre-determined algae species, does not means that 100% of the shelter substrate should be covered by seaweed, but that 100% of the seaweed present on the substrate at this step is of the pre-determined algae species. In some embodiments, the seaweed shelter at this step comprise at least 95%, such as at least 98%, such as at least 99 of the pre-determined algae species at this stage in the process of providing a system according to the present invention.

After arranging the seaweed shelter of the present invention in a sea cage for farming salmon, further growth of the seaweed is allowed under uncontrolled conditions in the sea cage for a period of time. By "uncontrolled condition" may be meant that the growth is exposed to the climate without control of the climate. The pre-determined species will dominate for a period of time. However, if the seaweed shelters are not replaced frequently, random algae or other may start to dominate the shelters. To keep the amount of random algae growth down, the seaweed shelters should be replaced frequently, such as at least every 6 month or at least every 12 month or at least every 18 month. In some embodiments, growth of the seaweed under uncontrolled conditions in the sea cage for a period of time should not exceed 2 years, preferably not 1 year. Preferably, the seaweed shelters are replaced for each salmon cycle.

If more than 20%, such as more than 15%, such as more than 10%, such as more than 5% of the algae on the shelter substrate are not one or more predetermined species, but random species, the seaweed shelter may no longer be optimized for cleaner fish. Therefore, a seaweed shelter according to the present invention should comprise at least 80%, such as at least 85%, such as at least 90%, such as at least 95% of the pre-determined algae species or the pre-determined combination of algae species on the shelter substrate.

In some embodiments, the step of growing seaweed comprise the following steps
- inoculating/grafting the shelter substrate with cells, preferably spores, gametophytes and/or sporophytes, from the pre-determined algae species,
- cultivating the shelter substrate in a first controlled environment, such as in an incubator with filtered and UV treated full strength seawater and controllable light and temperature conditions, for period of time, such as between 1-3 month, to allow the cells to hatch and attach to the shelter substrate and start growing,
- move the shelter substrate to another location, such as a tank or container for further cultivation in a second controlled environment comprising filtered and UV treated full strength seawater, controllable light and temperature conditions and a flow of a certain velocity, until the pre-determined algae species population have reached a mean pre-determined size.

The first controlled environment may be an incubator or a hatchery, that is a facility where the necessary conditions for the seaweed species to go through their life history phases and reach the phase from which large individuals can be grown. Important conditions in the first controlled environment are filtered and UV treated full strength seawater and controllable light and temperature conditions. The skilled person would be able to determine the conditions necessary to cultivate the shelter substrate with cells.

For the seaweed to reach a size that makes the seaweed shelter functional, the shelters have an on-growth period in a second controlled environment where the seaweed shelters are arranged in large containers or tanks. The conditions in the second controlled environment are preferably similar to the first controlled environment with filtered and UV treated full strength seawater and controllable light and temperature conditions. The crucial difference is that the shelters need large tanks and a flow of a certain velocity under the second controlled environment.

Not before the algae have grown to a certain pre-determined size, are the seaweed shelters arranged in the sea cages. Because the grown algae already dominate the shelter substrate, they will not easily be outmatched by other algae species when arranged in the sea cages. Furthermore, they have already reached a certain size and are not as dependent on the sea cage conditions for survival, as they would have been in earlier life phases.

In some preferred embodiments, either algal spores may be sowed on the shelter substrate or gametophyte cultures in which young sporophytes have started to develop may be seeded on the shelter substrate. The sporophytes develop from fertilized eggs on the female gametophyte.

In some embodiments, the mean pre-determined size of the pre-determined algae species population is reached when at least 30%, such at least 40%, such as at least 50% of at least one of algae species of the pre-determined algae species have a length of at least 5 cm, such as at least 10 cm, such as at least 15 cm. The length of each individual of the seaweed population may be measured from the area of the shelter substrate where the individual is attached, to the most distance branch of that individual.

The pre-determined size can be even smaller when the seaweed shelter is to be arranged in a land-based tank for cleaner fish farming. Such tanks comprise filtered sea water, which may comprise some micro-algae. However, since such tanks are cleaned often, random macro-algae growth is not expected. Thus, the growth of seaweed of the pre-determined algae species will continue in the land-based tanks for cleaner fish breeding without competition from other species.

Herein the terms "seaweed" and "algae species" are used interchangeably and generally refers to macroscopic multicellular marine algae.

In salmon aquaculture, sea cages, also called sea pens or net pens, are used to keep the salmon within a pre-defined area. Many different types and forms of sea cages exist, but they are usually made of mesh framed with steel or plastic. They can be square or circular, and are normally 10 to 32 m across and 10 m deep, with volumes between 1,000 and 10,000 m³. A large sea cage can contain up to 90,000 salmon. They are usually placed side by side to form a system called a sea farm or sea site, with a floating wharf and walkways along the net boundaries. Additional nets can also surround the sea farm to keep out predatory marine mammals. In contrast to closed or recirculating systems, the open net cages of salmonid farming lower farming costs, but provide no effective barrier to the discharge of wastes, parasites, and disease into the surrounding coastal waters. Land-based tanks are herein defined as the tanks in which cleaner fish, such as lumpfish, are produced.

In a third aspect, the present invention relates to a system according to claim 14 for increasing cleaner fish health and welfare in sea cages configured for salmon farming or in land-based tanks configured for cleaner fish farming, the system comprising
- a sea cage configured for salmon farming or a land-based tank configured for cleaner-fish farming;
- a seaweed shelter obtained or obtainable by the method to the second aspect, configured to be a habitat for cleaner fish within the sea cage or the land-based tank, wherein the seaweed shelter comprise
- a shelter substrate and seaweed growing on the shelter substrate, wherein at least 80% of the seaweed (5) is of a pre-determined algae species.

### BRIEF DESCRIPTION OF THE FIGURES

The system according to the invention will now be described in more detail with regard to the accompanying figures. The figures show one way of implementing the present invention and is not to be construed as being limiting to other possible embodiments falling within the scope of the attached claim set.

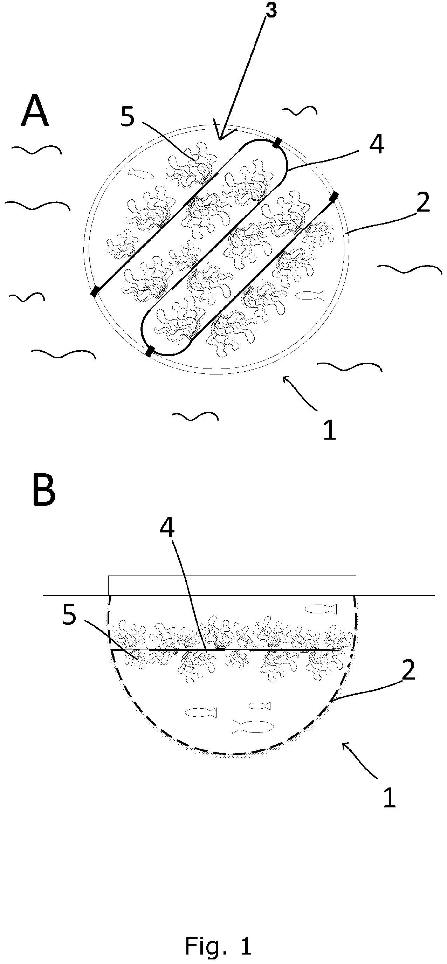

Figure 1 is a schematic illustration of a system according to an embodiment of the present invention.

### DETAILED DESCRIPTION OF AN EMBODIMENT

Reference is made to fig. 1, illustrating a system 1 according to an embodiment of the present invention. Fig. 1A illustrates a top view of the system 1, whereas fig. 1B shows a cross-sectional side view of the system 1.

The system illustrated in fig. 1 comprise a sea cage 2 arranged in the sea. In the present embodiment, a top section of the sea cage 2 is circular and the area within the sea cage have a semi-dome like shape.

A seaweed shelter 3 configured to be a habitat for lumpfish is arranged within the sea cage 2. The seaweed shelter 3 comprise a shelter substrate 4 and seaweed 5 growing on the shelter substrate 4. At least 80% of the seaweed 5 is of a pre-determined algae species suitable for lumpfish health and welfare. Most seaweed individuals have a certain size, such as at least 20cm. The seaweed individuals together provide a seaweed "forest" where lumpfish can hide and attach.

In the present embodiment, the shelter substrate 4 is arranged beneath the sea surface within the sea cage 2. However, it may be arranged otherwise, such as near the surface or closer to the bottom section of the sea cage if desired. In the illustrated embodiment, the shelter substrate 4 is a flexible line arranged in a horizontal pattern, such as a meandering pattern, within the sea cage 1. The shelter substrate 4 is attached to the sea cage 2 at several attachment points. It should be noted that the shape of the sea cage 2 and the shelter substrate 4 is not important for the present invention and that the above embodiment is only one out of many possible embodiments of a system according to the present invention.

The same principles as for the above embodiment will also apply for a system comprising land-based tanks instead of sea-cages. The only difference being that the sea-cage is substituted with a land-based tank.

The disclosure of the invention has been presented with focus on salmon. However, the invention is not as such limited to salmon and finds use for *Salmonidae* such as salmon.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention.

### LIST OF REFERENCE SYMBOLS USED

- 1: system
- 2: sea cage
- 3: seaweed shelter
- 4: shelter substrate
- 5: seaweed

## Claims

1. A system (1) for increasing cleaner fish health and welfare in sea cages (2) configured for salmon farming or in land-based tanks configured for cleaner fish farming, the system comprising
- a sea cage (2) configured for salmon farming or a land-based tank configured for cleaner-fish farming;
- a seaweed shelter (3) arranged in the sea cage or in the land-based tank, configured to be a habitat for cleaner fish within the sea cage or the land-based tank, wherein the seaweed shelter (3) comprises
- a shelter substrate (4) and seaweed (5) growing on the shelter substrate, **characterized in that** at least 80% of the seaweed (5) is of a pre-determined algae species, and **in that** the pre-determined algae species comprise one or more of *Saccharina latissima* and/or *Laminaria digitata* and/or *Laminaria hyperborea* and/or *Alaria esculenta* and/or *Palmaria palmata* and/or *Porphyra umbilicalis.*

2. A system (1) according to claim 1, wherein the system (1) is configured for increasing lumpfish health and welfare in sea cages (2) configured for salmon farming or in land-based tanks configured for cleaner fish farming, and the pre-determined algae species is configured for improving health and welfare of lumpfish.

3. A system (1) according to any of claims 1 or 2, wherein the pre-determined algae species comprise a combination of more than one, such as two or three pre-determined algae species.

4. A system (1) according to any of the preceding claims, wherein the specific pre-determined algae species comprise one or more species of brown algae and/or red algae.

5. A system (1) according to any of the preceding claims, wherein at least 30%, such at least 40%, such as at least 50% of at least one of algae species of the pre-determined algae species of the seaweed shelter (3) have a length of at least 5 cm, such as at least 10 cm, such as at least 15 cm.

6. A system (1) according to any of the preceding claims, wherein at least a section, preferably the full length, of the shelter substrate (4) extends horizontally beneath the sea surface.

7. A system (1) according to any of the preceding claims 1-6, wherein at least a section, preferably the full length, of the shelter substrate (4) extends vertically beneath the sea surface.

8. A method for providing a system according to any of claims 1-7, the method comprising the steps of
- providing a shelter substrate (4) of a desirable size and form
- growing seaweed of the pre-determined algae species on the shelter substrate (4) under controlled conditions to obtain a seaweed shelter (3) comprising 100% of the pre-determined algae species
- arranging the seaweed shelter (4) in a sea cage (1) for farming salmon or in a land-based tank for cleaner fish farming and allowing further growth of the seaweed for a period of time

9. A method according to claim 8, wherein the step of growing seaweed comprise the following steps
- inoculating/grafting the shelter substrate (4) with cells, preferably spores, gametophytes and/or sporophytes from the pre-determined algae species,
- cultivating the shelter substrate (4) in a first controlled environment, such as in an incubator with filtered and UV treated full strength seawater and controllable light and temperature conditions, for period of time, such as between 1-3 month, to allow the cells to hatch and attach to the shelter substrate (4) and start growing,
- move the shelter substrate (4) to another location, such as a tank or container for further cultivation in a second controlled environment comprising filtered and UV treated full strength seawater, controllable light and temperature conditions and a flow of a certain velocity, until the pre-determined algae species population have reached a mean pre-determined size.

10. A method according to claim 8 or 9, wherein alga spores are seeded on the shelter substrate.

11. A method according to claim 8 or 9, wherein gametophyte cultures in which young sporophytes have started to develop are seeded on the shelter substrate.

12. A method according to any of claims 8-11, wherein the mean pre-determined size of the pre-determined algae species population is reached when at least 30%, such at least 40%, such as at least 50% of at least one of algae species of the pre-determined algae species have a length of at least 5 cm, such as at least 10 cm, such as at least 15 cm.

13. A method according to any of claims 8-11, wherein growth of the seaweed under uncontrolled conditions in the sea cage (1) for a period of time should not exceed 2 years, preferably not 1 year.

14. A system (1) for increasing cleaner fish health and welfare in sea cages (2) configured for salmon farming or in land-based tanks configured for cleaner fish farming, the system comprising
- a sea cage (2) configured for salmon farming or a land-based tank configured for cleaner-fish farming;
- a seaweed shelter (3) obtained or obtainable by the method according to any of claims 8-13, configured to be a habitat for cleaner fish within the sea cage or the land-based tank, wherein the seaweed shelter (3) comprise
- a shelter substrate (4) and seaweed (5) growing on the shelter substrate, wherein at least 80% of the seaweed (5) is of a pre-determined algae species.

## Patentansprüche

1. System (1) zur Verbesserung der Gesundheit und des Wohlergehens von Putzerfischen in Meereskäfigen (2), die für Lachszucht konfiguriert sind, oder in landgestützten Tanks, die für Putzerfischzucht konfiguriert sind, wobei das System umfasst
- einen Meereskäfig (2), der für Lachszucht konfiguriert ist, oder einen landgestützten Tank, der für Putzerfischzucht konfiguriert ist;
- einen Meeresalgenschutz (3), der in dem Meereskäfig oder in dem landgestützten Tank angeordnet ist, der konfiguriert ist, um ein Lebensraum für Putzerfische in dem Meereskäfig oder dem landgestützten Tank zu sein, wobei der Meeresalgenschutz (3) umfasst
- ein Schutzsubstrat (4) und auf dem Schutzsubstrat wachsende Meeresalgen (5), **dadurch gekennzeichnet, dass** mindestens 80 % der Meeresalgen (5) aus einer vorbestimmten Algenart bestehen, und dass die vorbestimmte Algenart eine oder mehrere von *Saccharina latissima* und/oder *Laminaria digitata* und/oder *Laminaria hyperborea* und/oder *Alaria esculenta* und/oder *Palmaria palmata* und/oder *Porphyra umbilicalis* umfasst.

2. System (1) nach Anspruch 1, wobei das System (1) zur Verbesserung der Gesundheit und des Wohlergehens von Seehasen in Meereskäfigen (2), die für Lachszucht konfiguriert sind, oder in landgestützten Tanks, die für Putzerfischzucht konfiguriert sind, konfiguriert ist und die vorbestimmte Algenart zur Verbesserung der Gesundheit und des Wohlergehens von Seehasen konfiguriert ist.

3. System (1) nach einem der Ansprüche 1 oder 2, wobei die vorbestimmte Algenart eine Kombination von mehr als einer, wie beispielsweise zwei oder drei vorbestimmten Algenarten, umfasst.

4. System (1) nach einem der vorstehenden Ansprüche, wobei die spezifische vorbestimmte Algenart eine oder mehrere Arten von Braunalgen und/oder Rotalgen umfasst.

5. System (1) nach einem der vorstehenden Ansprüche, wobei mindestens 30 %, wie beispielsweise mindestens 40 %, wie beispielsweise mindestens 50 %, von mindestens einer der Algenarten der vorbestimmten Algenart des Meeresalgenschutzes (3) eine Länge von mindestens 5 cm, wie beispielsweise mindestens 10 cm, wie beispielsweise mindestens 15 cm, aufweisen.

6. System (1) nach einem der vorstehenden Ansprüche, wobei sich mindestens ein Abschnitt, vorzugsweise die gesamte Länge des Schutzsubstrats (4) horizontal unter der Meeresoberfläche erstreckt.

7. System (1) nach einem der vorstehenden Ansprüche 1 - 6, wobei sich mindestens ein Abschnitt, vorzugsweise die gesamte Länge des Schutzsubstrats (4) vertikal unter der Meeresoberfläche erstreckt.

8. Verfahren zur Bereitstellung eines Systems nach einem der Ansprüche 1-7, wobei das Verfahren die Schritte umfasst von
- Bereitstellen eines Schutzsubstrats (4) von einer gewünschten Größe und Form
- Wachsen lassen von Meeresalgen der vorbestimmten Algenart auf dem Schutzsubstrat (4) unter kontrollierten Bedingungen, um einen Meeresalgenschutz (3) zu erhalten, der 100 % der vorbestimmten Algenart umfasst
- Anordnen des Meeresalgenschutzes (4) in einem Meereskäfig (1) für Lachszucht oder in einem landgestützten Tank für Putzerfischzucht und Ermöglichen des weiteren Wachstums der Meeresalgen für einen Zeitraum.

9. Verfahren nach Anspruch 8, wobei der Schritt des Wachsen Lassens von Meeresalgen die folgenden Schritte umfasst
- Beimpfen/Pfropfen des Schutzsubstrats (4) mit Zellen, vorzugsweise Sporen, Gametophyten und/oder Sporophyten der vorbestimmten Algenart,
- Kultivieren des Schutzsubstrats (4) in einer ersten kontrollierten Umgebung, wie beispielsweise in einem Inkubator mit gefiltertem und UV-behandeltem vollwertigem Meerwasser und kontrollierbaren Licht- und Temperaturbedingungen, für einen Zeitraum, wie beispielsweise zwischen 1 - 3 Monaten, damit die Zellen schlüpfen und sich an das Schutzsubstrat (4) heften und zu wachsen beginnen können,
- Bewegen des Schutzsubstrats (4) an einen anderen Ort, wie beispielsweise einen Tank oder Behälter, zur weiteren Kultivierung in einer zweiten kontrollierten Umgebung, die gefiltertes und UV-behandeltes vollwertiges Meerwasser, kontrollierbare Licht- und Temperaturbedingungen und eine Strömung mit einer bestimmten Geschwindigkeit umfasst, bis die vorbestimmte Algenartpopulation eine mittlere vorbestimmte Größe erreicht hat.

10. Verfahren nach Anspruch 8 oder 9, wobei Algensporen auf das Schutzsubstrat gesät werden.

11. Verfahren nach Anspruch 8 oder 9, wobei Gametophytenkulturen, in denen sich junge Sporophyten zu entwickeln begonnen haben, auf das Schutzsubstrat gesät werden.

12. Verfahren nach einem der Ansprüche 8 - 11, wobei die mittlere vorbestimmte Größe der vorbestimmten Algenartpopulation erreicht ist, wenn mindestens 30 %, wie beispielsweise mindestens 40 %, wie beispielsweise mindestens 50 % von mindestens einer der Algenarten der vorbestimmten Algenart eine Länge von mindestens 5 cm, wie beispielsweise mindestens 10 cm, wie beispielsweise mindestens 15 cm aufweisen.

13. Verfahren nach einem der Ansprüche 8-11, wobei das Wachstum der Meeresalgen unter unkontrollierten Bedingungen in dem Meereskäfig (1) über einen Zeitraum von nicht mehr als 2 Jahren, vorzugsweise nicht mehr als 1 Jahr, erfolgen sollte.

14. System (1) zur Verbesserung der Gesundheit und des Wohlergehens von Putzerfischen in Meereskäfigen (2), die für Lachszucht konfiguriert sind, oder in landgestützten Tanks, die für Putzerfischzucht konfiguriert sind, wobei das System umfasst
- einen Meereskäfig (2), der für Lachszucht konfiguriert ist, oder einen landgestützten Tank, der für Putzerfischzucht konfiguriert ist;
- einen Meeresalgenschutz (3), der durch das Verfahren nach einem der Ansprüche 8 - 13 erhalten wird oder erhältlich ist, der konfiguriert ist, um ein Lebensraum für Putzerfische in dem Meereskäfig oder dem landgestützten Tank zu sein, wobei der Meeresalgenschutz (3) umfasst
- ein Schutzsubstrat (4) und auf dem Schutzsubstrat wachsende Meeresalgen (5), wobei mindestens 80 % der Meeresalgen (5) von einer vorbestimmten Algenart sind.

## Revendications

1. Système (1) pour améliorer la santé et le bien-être de poissons nettoyeurs dans des cages marines (2) configurées pour l'élevage de saumons ou dans des bassins terrestres configurés pour l'élevage de poissons nettoyeurs, le système comprenant
- une cage marine (2) configurée pour l'élevage de saumons ou un bassin terrestre configuré pour l'élevage de poissons nettoyeurs ;
- un abri d'algues (3) agencé dans la cage marine ou dans le bassin terrestre, configuré pour être un habitat pour les poissons nettoyeurs dans la cage marine ou le bassin terrestre, dans lequel l'abri d'algues (3) comprend
- un substrat d'abri (4) et des algues (5) poussant sur le substrat d'abri, **caractérisé en ce que** au moins 80 % des algues (5) sont d'une espèce d'algae prédéterminée, et **en ce que** les espèces d'algae prédéterminées comprennent l'une ou plusieurs parmi *Saccharina latissima* et/ou *Laminaria digitata* et/ou *Laminaria hyperborea* et/ou *Alaria esculenta* et/ou *Palmaria palmata* et/ou *Porphyra umbilicalis.*

2. Système (1) selon la revendication 1, dans lequel le système (1) est configuré pour améliorer la santé et le bien-être des lompes dans des cages marines (2) configurées pour l'élevage de saumons ou dans des bassins terrestres configurés pour l'élevage de poissons nettoyeurs, et l'espèce d'algues prédéterminée est configurée pour améliorer la santé et le bien-être des lompes.

3. Système (1) selon l'une quelconque des revendications 1 ou 2, dans lequel les espèces d'algae prédéterminées comprennent une combinaison de plus d'une, comme deux ou trois, espèces d'algae prédéterminées.

4. Système (1) selon l'une quelconque des revendications précédentes, dans lequel les espèces d'algae prédéterminées spécifiques comprennent une ou plusieurs espèces d'algae brunes et/ou d'algae rouges.

5. Système (1) selon l'une quelconque des revendications précédentes, dans lequel au moins 30 %, tel qu'au moins 40 %, tel qu'au moins 50 % d'au moins une des espèces d'algae des espèces d'algues prédéterminées de l'abri d'algues (3) ont une longueur d'au moins 5 cm, telle qu'au moins 10 cm, telle qu'au moins 15 cm.

6. Système (1) selon l'une quelconque des revendications précédentes, dans lequel au moins une section, de préférence la longueur totale, du substrat de l'abri (4) s'étend horizontalement sous la surface de la mer.

7. Système (1) selon l'une quelconque des revendications précédentes, dans lequel au moins une section, de préférence la longueur totale, du substrat de l'abri (4) s'étend verticalement sous la surface de la mer.

8. Procédé pour fournir un système selon l'une quelconque des revendications 1 à 7, le procédé comprenant les étapes consistant à
- fournir un substrat d'abri (4) d'une taille et d'une forme souhaitables
- faire pousser des algues de l'espèce d'algae prédéterminée sur le substrat d'abri (4) dans des conditions contrôlées pour obtenir un abri d'algues (3) comprenant 100 % de l'espèce d'algae prédéterminée.
- disposer l'abri d'algues (4) dans une cage marine (1) pour l'élevage de saumons ou dans un bassin terrestre pour l'élevage de poissons nettoyeurs et laisser les algues pousser pendant un certain temps.

9. Procédé selon la revendication 8, dans lequel l'étape consistant à faire pousser des algues comprend les étapes suivantes
- inoculer/greffer des cellules sur le substrat d'abri (4), de préférence des spores, des gamétophytes et/ou des sporophytes de l'espèce d'algues prédéterminée,
- cultiver le substrat d'abri (4) dans un premier environnement contrôlé, tel qu'un incubateur avec de l'eau de mer pure filtrée et traitée aux UV et des conditions de lumière et de température contrôlables, pendant une période de temps, telle qu'entre 1 et 3 mois, pour permettre aux cellules d'éclore et de se fixer au substrat d'abri (4) et de commencer à croître,
- déplacer le substrat d'abri (4) vers un autre endroit, tel qu'un bassin ou un conteneur, pour poursuivre la culture dans un second environnement contrôlé comprenant de l'eau de mer pure filtrée et traitée aux UV, des conditions de lumière et de température contrôlables et un débit d'une certaine vitesse, jusqu'à ce que la population de l'espèce d'algues prédéterminée ait atteint une taille moyenne prédéterminée.

10. Procédé selon la revendication 8 ou 9, dans lequel des spores d'algues sont ensemencées sur le substrat d'abri.

11. Procédé selon la revendication 8 ou 9, dans lequel des cultures de gamétophytes dans lesquelles de jeunes sporophytes ont commencé à se développer sont ensemencées sur le substrat d'abri.

12. Procédé selon l'une quelconque des revendications 8 à 11, dans lequel la taille moyenne prédéterminée de la population de l'espèce d'algues prédéterminée est atteinte lorsqu'au moins 30 %, tel qu'au moins 40 %, tel qu'au moins 50 % d'au moins une des espèces d'algae des espèces d'algae prédéterminées ont une longueur d'au moins 5 cm, telle qu'au moins 10 cm, telle qu'au moins 15 cm.

13. Procédé selon l'une quelconque des revendications 8 à 11, dans lequel la croissance des algues dans des conditions non contrôlées dans la cage marine (1) pendant une période de temps ne doit pas dépasser 2 ans, de préférence pas dépasser 1 an.

14. Système (1) pour améliorer la santé et le bien-être des poissons nettoyeurs dans des cages marines (2) configurées pour l'élevage de saumons ou dans des bassins terrestres configurés pour l'élevage de poissons nettoyeurs, le système comprenant
- une cage marine (2) configurée pour l'élevage de saumons ou un bassin terrestre configuré pour l'élevage de poissons nettoyeurs ;
- un abri d'algues (3) obtenu ou pouvant être obtenu par le procédé selon l'une quelconque des revendications 8 à 13, configuré pour être un habitat pour des poissons nettoyeurs dans la cage marine ou le bassin terrestre, dans lequel l'abri d'algues (3) comprend
- un substrat d'abri (4) et des algues (5) poussant sur le substrat d'abri, dans lequel au moins 80 % des algues (5) sont d'une espèce d'algae prédéterminée.
